# EUROPÄISCHE PATENTSCHRIFT

(11) **EP 1 227 334 B1**
(45) Veröffentlichungstag und Bekanntmachung des Hinweises auf die Patenterteilung: **22.10.2003**
(21) Anmeldenummer: 01810052.9
(22) Anmeldetag: 19.01.2001
(51) Int. Cl.: G01S 5/14

(54) **System und Verfahren zur ortsabhängigen Online-Projektdatenerfassung**
System and method of position dependent online capturing of project data
Système et dispositif de saisie en ligne des données de projet dependant de la position

(43) Veröffentlichungstag der Anmeldung: 31.07.2002
(73) Patentinhaber: Swisscom AG, 3000 Bern 29 (CH)
(72) Erfinder: Messmer, Bruno, 3600 Thun (CH); Muri, Ivo, 6210 Sursee (CH)
(74) Vertreter: BOVARD AG - Patentanwälte

(56) Entgegenhaltungen:
- WO-A-00/41428
- US-A- 5 648 770
- US-A- 5 726 660

## Beschreibung

Die vorliegende Erfindung betrifft ein System und Verfahren zur Erfassung, Speicherung und Verwaltung von Projektdatensätzen, welche Projektdaten enthalten, und insbesondere ein System umfassend ein zentrales Computersystem zum Empfangen der Projektdaten und zum Speichern und Verwalten der Projektdatensätze, mindestens ein mobiles Kommunikationsendgerät mit Eingabemitteln zum Erfassen der Projektdaten, welches mobile Kommunikationsendgerät über ein Kommunikationsnetz mit dem zentralen Computersystem verbunden ist, und Positionsbestimmungsmittel zur Bestimmung der aktuellen Position des mobilen Kommunikationsendgerätes.

Systeme und Verfahren der eingangs erwähnten Art dienen beispielsweise dazu, vor Ort die Aufwendungen für einzelne Aufträge und Projekte zu erfassen. Die Erfassung von Projektdaten (Aufwendungen) vor Ort erfolgte früher hauptsächlich mittels handschriftlicher Aufzeichnungen. Dabei füllte beispielsweise ein Aussendienstmitarbeiter nach Erledigung eines Auftrages vor Ort einen handschriftlichen Servicerapport aus, welcher neben der Angabe von Ort, Zeit und Auftrag Angaben über die geleisteten Arbeiten und Dienstleistungen enthielt, oder ein Bauhandwerker erstellte am Ende eines Arbeitstages einen handschriftlichen Arbeitsrapport, welcher für ein bestimmtes Bauprojekt Angaben über die geleisteten Arbeiten, die dafür aufgewendeten Arbeitszeiten, verbrauchtes Material und Ähnliches enthielt. Das Erfassen von Projektdaten und das Erstellen von Berichten, wie beispielsweise den erwähnten Service- und Arbeitsrapporten, erfolgt heute mehr und mehr mit Hilfe von Computern. Zur Erfassung der Projektdaten (Aufwendungen) vor Ort dienen beispielsweise Notebookcomputer oder Endgeräte, welche mit einem Display und einer Tastatur ausgestattet sind, und welche über ein Kommunikationsnetz mit einem zentralen Computer verbunden sind.

Das Patentdokument WO 95/17686 beschreibt eine mobile Positionsbestimmungseinheit bestehend aus einem GPS (Global Positioning System)-Empfänger und einem Kommunikationsendgerät, welches über ein Kommunikationsnetz mit einer Zentrale oder Agentur verbunden ist. Mit Hilfe der Positionsbestimmungseinheit kann die geografische Position der Positionsbestimmungseinheit bestimmt und an die Zentrale übermittelt werden.

Die Patentschrift US 5'919'239 beschreibt eine mobile Aufzeichnungsvorrichtung und ein Verfahren, um die Position der mobilen Aufzeichnungsvorrichtung, zusammen mit der Uhrzeit, zu bestimmen und zu speichern. Die mobile Aufzeichnungsvorrichtung gemäss Patentschrift US 5'919'239 umfasst einen GPS-Empfänger, einen Prozessor, einen Speicher zum Speichern der Zeit- und Positionsdaten, einen Display, eine Tastatur und einen Mobilfunksendeempfänger, mit welchem die gespeicherten Zeit- und Positionsdaten an einen zentralen Computer übermittelt werden, welcher eine Software zum Erstellen von Berichten enthält. Die Bestimmung der Position der mobilen Aufzeichnungsvorrichtung und die Speicherung der Positionsdaten zusammen mit der zugehörigen Zeitinformation kann automatisch in regelmässigen Zeitabständen erfolgen, oder auf Grund eines Tastendrucks oder eines andern Ereignisses ausgelöst werden, oder auch auf Anordnung des zentralen Computers erfolgen. Weiter verfügt die mobile Aufzeichnungsvorrichtung gemäss Patentschrift US 5'919'239 über einen Dateneingang für Fahrzeug- und Motordaten, über welchen Fahrzeugdaten, wie beispielsweise die Fahrzeuggeschwindigkeit, erfasst werden können. Als Anwendung ist die automatische Überwachung und Protokollierung von Geschwindigkeitsübertretungen erwähnt.

Die Patentschrift US 5'726'660 beschreibt eine mobile Aufzeichnugsvorrichtung nach den Merkmalen des oberbegriffs von Anspruch 1.

Die Systeme und Verfahren aus dem Stand der Technik haben den Nachteil, dass sie die Erfassung von Projektdaten vor Ort nicht optimal unterstützen. So muss ein Benutzer eines Computersystems zur Erfassung von Projektdaten vor Ort zunächst aus mehreren Projekten dasjenige Projekt auswählen, zu dem Projektdaten eingegeben werden sollen, und innerhalb des ausgewählten Projektes müssen diejenigen Projektdatensätze ausgewählt werden, in welche die Projektdaten eingegeben werden sollen. Bei einer Vielzahl von Projekten und Projektdatensätzen kann die Auswahl zeitraubend sein. Weiter besteht eine gewisse Wahrscheinlichkeit, dass bei der Auswahl Fehler gemacht werden, und Projektdaten in einen falschen Projektdatensatz eingegeben werden.

Es ist eine Aufgabe der vorliegenden Erfindung, ein neues System und Verfahren zur Online-Projektdatenerfassung vorzuschlagen, welche die Erfassung von Projektdaten vor Ort vereinfachen und die Wahrscheinlichkeit von Eingaben in falsche Projektdatensätze reduzieren, und welche die Nachteile im Stand der Technik vermeiden.

Gemäss der vorliegenden Erfindung werden diese Ziele insbesondere durch die Merkmale der unabhängigen Ansprüche erreicht. Weitere vorteilhafte Ausführungsformen gehen ausserdem aus den abhängigen Ansprüchen und aus der Beschreibung hervor.

Die vorliegende Erfindung lässt sich auf ein System und Verfahren zur Erfassung, Speicherung und Verwaltung von Projektdatensätzen, welche Projektdaten enthalten, anwenden. Das System umfasst ein zentrales Computersystem zum Empfangen der Projektdaten und zum Speichern und Verwalten der Projektdatensätze, mindestens ein mobiles Kommunikationsendgerät, beispielsweise ein SMS (Short Message Service), USSD (Unstructured Supplementary Service Data) und/oder WAP (Wireless Application Protocol)-fähiges Mobilfunktelefon oder einen Notebook- oder Palmtop-Computer, mit Eingabemitteln, beispielsweise mit Tastatur und Display oder mit einem berührungssensitiven Display, zum Erfassen der Projektdaten, welches mobile Kommunikationsendgerät zur Erfassung und Übermittlung der Projektdaten über Kommunikationsnetze, wie z.B. das Internet, Internet Mobile oder Mobilfunktelefonnetze, beispielsweise UMTS (Universal Mobile Telecommunications System)-, GSM (Global System for Mobile communications)- oder satellitenbasierte Mobilfunktelefonnetze, unter Verwendung von SMS, USSD und/oder WAP, mit dem zentralen Computersystem verbindbar ist, und Positionsbestimmungsmittel, wie beispielsweise einen GPS (Global Positioning System)-Empfänger, zur Bestimmung der aktuellen Position des mobilen Kommunikationsendgerätes, wobei im zentralen Computersystem Datenstrukturen, beispielsweise in Form von Datenbankanwendungen, eingerichtet sind, welche die genannten Projektdatensätze zur Speicherung der zu erfassenden Projektdaten umfassen, und den Projektdatensätzen jeweils feste Geodaten zugeordnet sind, welche Geodaten ein geografisches Gebiet definieren, und wobei das System Steuermittel, beispielsweise in Form von Filterfunktionen, umfasst, um die Erfassung der Projektdaten so zu steuern, dass über das mobile Kommunikationsendgerät nur Projektdaten für diejenigen Projektdatensätze erfassbar sind, welchen Geodaten zugeordnet sind, die ein geografisches Gebiet definieren, welches geografische Gebiet die aktuelle Position des mobilen Kommunikationsendgerätes miteinschliesst.

Das erfindungsgemässe System und das erfindungsgemässe Verfahren, welches das erfindungsgemässe System benützt, haben den Vorteil, dass die Auswahl eines Projektdatensatzes für die Eingabe der Projektdaten vor Ort wesentlich vereinfacht wird, indem die Auswahl auf diejenigen Projektdatensätze beschränkt ist, welche mit der aktuellen Position des mobilen Kommunikationsendgerätes vereinbar sind. Damit wird auch die Wahrscheinlichkeit, dass ein falscher Projektdatensatz gewählt wird, wesentlich reduziert. Ein weiterer Vorteil des erfindungsgemässe Systems und Verfahrens besteht in der Kontrolle der Projektdatenerfassung. Durch das erfindungsgemässe System und Verfahren wird automatisch sichergestellt, dass nur Projektdaten von denjenigen Projektdatensätzen eingegeben werden können, welche mit der aktuellen Position des mobilen Kommunikationsendgerätes vereinbar sind. Handelt es sich bei den erfassten Projektdaten z.B. um Aufwendungen, wie beispielsweise Arbeitsstunden eines Handwerkers oder Servicetechnikers, so ist der Nachweis der Anwesenheit des Handwerkers oder Servicetechnikers im betreffenden geografischen Gebiet von nicht zu unterschätzender Bedeutung. Eine nachträgliche Anwesenheitskontrolle auf Grund von aufgezeichneten Positionsdaten erübrigt sich damit.

In einer weiteren vorteilhaften Ausführungsform umfasst das System Steuermittel, um das System derart zu steuern, dass im mobilen Kommunikationsendgerät nur Eingabefelder für Projektdaten von denjenigen Projektdatensätzen angezeigt werden, welchen Geodaten zugeordnet sind, die ein geografisches Gebiet definieren, welches die aktuelle Position des mobilen Kommunikationsendgerätes miteinschliesst.

In einer weiteren vorteilhaften Ausführungsform umfasst das System Steuermittel, um die Projektdaten bei der Erfassung auf Grund der aktuellen Position des mobilen Kommunikationsendgerätes automatisch bestimmten Projektdatensätzen zu zuordnen.

Vorteilhafterweise umfasst das mobile Kommunikationsendgerät Identifizierungsmittel zum Identifizieren des Kommunikationsendgerätebenutzers, und Übermittlungsmittel zur Übermittlung von Identifizierungsdaten an das zentrale Computersystem, und das zentrale Computersystem Programmmittel umfasst, um den Kommunikationsendgerätebenutzer auf Grund der übermittelten Identifizierungsdaten zu identifizieren.

Vorteilhafterweise arbeitet das mobile Kommunikationsendgerät nach dem GSM-Standard.

Vorteilhafterweise ist das mobile Kommunikationsendgerät WAP (Wireless Application Protocol)-fähig.

Vorteilhafterweise umfassen die Positionsbestimmungsmittel einen GPS (General Positioning System)-Empfänger.

Die vorliegende Erfindung lässt sich auch auf ein Verfahren zur Erfassung, Speicherung und Verwaltung von Projektdatensätzen, welche Projektdaten enthalten, anwenden. Dabei umfasst das Verfahren vorteilhafterweise folgende Verfahrensschritte: Bestimmen und/oder Abfragen der aktuellen Position eines mobilen Kommunikationsendgerätes für die Erfassung von Projektdaten, beispielsweise mittels eines GPS-Empfängers, welcher mit dem mobilen Kommunikationsendgerät gekoppelt ist; Übermitteln der aktuellen Position des mobilen Kommunikationsendgerätes an ein zentrales Computersystem, in welchem Datenstrukturen eingerichtet sind, welche Projektdatensätze zur Speicherung der zu erfassenden Projektdaten umfassen, welchen Projektdatensätzen jeweils feste Geodaten zugeordnet sind, welche Geodaten ein geografisches Gebiet definieren; Ermitteln derjenigen Projektdatensätze im zentralen Computersystem, welchen Geodaten zugeordnet sind, die ein geografisches Gebiet definieren, welches die aktuelle Position des mobilen Kommunikationsendgerätes miteinschliesst; Anzeige der Beschreibung der so ermittelten Projektdatensätze im mobilen Kommunikationsendgerät, beispielsweise auf einer Auswahl- und/oder Eingabemaske, welche auf einem Display des mobilen Kommunikationsendgerätes angezeigt wird; Auswahl eines der im mobilen Kommunikationsendgerät angezeigten Projektdatensätze; Eingabe der zum ausgewählten Projektdatensatz gehörenden Projektdaten über das mobile Kommunikationsendgerät, beispielsweise indem die entsprechende Information, z.B. Fahrtkosten oder eine Arbeitszeit, über eine Tastatur eingegeben wird; Übermitteln der eingegebenen Projektdaten über das Kommunikationsnetz, und Empfangen der eingegebenen Projektdaten im zentralen Computersystem; und Speichern der eingegebenen Projektdaten im zugehörigen Projektdatensatz im zentralen Computersystem.

Im Gegensatz zum Stand der Technik, der lediglich die Erfassung von Projektdaten vor Ort zusammen mit der aktuellen Position erlaubt, ermöglicht die vorliegende Erfindung die gezielte Erfassung von Projektdaten vor Ort je nach Standort (aktueller Position). Auf Grund von Zuordnungen, welche im zentralen Computersystem gespeichert sind, wird im erfindungsgemässen System und Verfahren die Erfassung von Projektdaten vor Ort auf Projektdaten für diejenigen Projektdatensätze beschränkt, welche mit der aktuellen Position vereinbar sind. Beispielsweise, indem im mobilen Kommunikationsendgerät abhängig vom Standort entsprechende Eingabefelder für die Projektdaten angezeigt werden. Dank dieser Beschränkung wird die Erfassung der Projektdaten vor Ort vereinfacht, und die Wahrscheinlichkeit von Fehlem bei der Auswahl der Projektdatensätze für die Erfassung der Projektdaten wird wesentlich reduziert. Damit verbunden ist eine wirksame Kontrolle der Benutzer, da Projektdaten, wie beispielsweise Arbeitszeiten, nur im vorgegebenen geografischen Gebiet erfasst werden können.

Die vorliegende Erfindung ist nachstehend anhand der folgenden Figuren näher beschrieben:
Fig. 1 zeigt ein Blockdiagramm eines Ausführungsbeispiels eines Systems gemäss der vorliegenden Erfindung,
Fig. 2 eine schematische Darstellung eines Ausführungsbeispiels der Datenstrukturen gemäss der vorliegenden Erfindung,
Fig. 3 ein Flussdiagramm einer Ausführungsvariante der Verfahrensschritte gemäss der vorliegenden Erfindung.

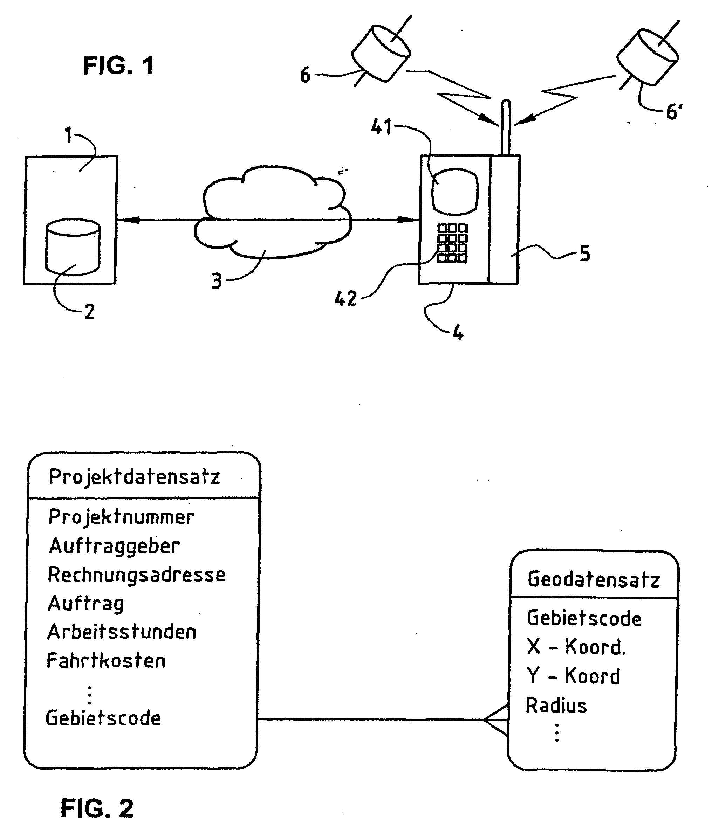

Fig. 1 illustriert in schematischer Weise den prinzipiellen Aufbau eines Systems gemäss einem Ausführungsbeispiel der vorliegenden Erfindung. Die Bezugsziffer 1 bezeichnet ein zentrales Computersystem zur Erfassung, Speicherung und Verwaltung von Projektdatensätzen, welche Projektdaten enthalten und Bezugsziffer 2 einen Massenspeicher im zentralen Computersystem 1. Weiter umfasst das System ein mobiles Kommunikationsendgerät 4, beispielsweise ein SMS-, USSD- und/oder WAP-fähiges Mobilfunktelefon oder einen Notebook- oder Palmtop-Computer, mit Eingabemitteln 42 und 41, beispielsweise mit einer Tastatur 42 und einem Display 41 oder mit einem berührungssensitiven Display, zur Erfassung von Projektdaten vor Ort. Die Verwendung anderer Erfassungsmittel, wie beispielsweise Magnetkartenleser, Barcodeleser und Ähnlichem ist selbstverständlich ebenfalls möglich. Das mobile Kommunikationsendgerät 4 ist über ein Kommunikationsnetz 3, z.B. über das Internet, Internet Mobile, oder über ein Mobilfunktelefonnetz, beispielsweise ein UMTS (Universal Mobile Telecommunications System)-, GSM (Global System for Mobile communications)- oder satellitenbasiertes Mobilfunktelefonnetz, unter Verwendung von SMS, USSD und/oder WAP, mit dem zentralen Computersystem 1 verbunden. Das mobile Kommunikationsendgerät 4 ist im Ausführungsbeispiel mechanisch und elektrisch mit einem Positionsbestimmungsmittel 5, beispielsweise einem GPS (Global Positioning System)-Empfänger, gekoppelt, welcher dazu dient, die aktuelle Position des mobilen Kommunikationsendgerätes 4 zu bestimmen. Wahlweise können auch externe Positionsbestimmungsmittel und/oder eine externe Positionsbestimmung eingesetzt werden, indem beispielsweise eine Näherung für die aktuelle Position des mobilen Kommunikationsendgerätes von einem Serviceprovider, z.B. vom Betreiber eines Mobilfunknetzes, abgefragt wird.

Die erwähnten Datenstrukturen sind im Ausführungsbeispiel in Form von Datenbankanwendungen im zentralen Computersystem 1 und im Massenspeicher 2 von Fig. 1 realisiert. Die Datenstrukturen umfassen unterschiedliche Projektdatensätze zur Speicherung der vor Ort zu erfassenden Projektdaten. Bei den vor Ort zu erfassenden Projektdaten kann es sich z.B. um Aufwendungen, wie beispielsweise Arbeitsstunden, Fahrtkosten, Materialkosten und Ähnliches, handeln, welche im Rahmen eines Projektes (Auftrages) erfasst und abgerechnet werden. Ein Projekt kann dabei einen oder mehrere Projektdatensätze enthalten. Neben den vor Ort zu erfassenden Projektdaten können die Projektdatensätze zusätzliche Projektdaten enthalten, so z.B. Daten, welche das Projekt definieren und/oder im Rahmen des Projektes von Bedeutung sind, wie beispielsweise Projektnummer, Auftraggeber, Rechnungsadresse, Auftrag, auszuführende Arbeiten und Ähnliches. Weiter sind den Projektdatensätzen im erfindungsgemässen System jeweils feste Geodaten zugeordnet. Die Geodaten können beispielsweise aus den X- und Y-Koordinaten eines Arbeitsstandortes, an welchem im Rahmen des Projektes (Auftrages) Arbeiten auszuführen sind, und einem Radius R bestehen. Das derart definierte geografische Gebiet umfasst eine Zone mit Radius R um den durch die X- und Y-Koordinaten festgelegten Arbeitsstandort. Selbstverständlich ist es auch möglich, die Geodaten direkt in den jeweiligen Projektdatensätzen zu speichern, und auf die Zuordnungen zu verzichten. Fig. 2 ist ein ERD (Entity Relationship Diagram) zum obigen Ausführungsbeispiel, welches einen Projektdatensatz zeigt, welchem Geodaten eines Geodatensatzes zugeordnet sind, die ein geografisches Gebiet definieren. Bei dem in Fig. 2 gezeigten Ausführungsbeispiel handelt es sich um ein sehr einfaches Beispiel, dass der Fachmann unschwer abändern und erweitern kann. So ist es z.B. vorteilhaft, die Kunden- und Rechnungsadressen nicht in den Projektdatensätzen selbst zu speichern, sondern in einer Adressdatenbank, und für die Projektdatensätzen Zuordnungen zu den entsprechenden Adressen in der Adressdatenbank vorzusehen. Die Projektdatensätze und damit die Datenstrukturen im zentralen Computersystem 1 sind abhängig von den zu speichernden Informationen, und insbesondere von den vor Ort zu erfassenden Projektdaten. Die Datenstrukturen, insbesondere die Projektdatensätze und die Zuordnungen, werden deshalb zweckmässigerweise am Anfang bei der Erfassung eines Projektes, z.B. eines Auftrages, im zentralen Computersystem 1 implementiert. Zweckmässigerweise werden am Anfang bei der Erfassung eines Projektes auch diejenigen Projektdaten im zentralen Computersystem 1 erfasst und gespeichert, welche bereits bekannt sind, so z.B. Daten, welche das Projekt definieren und/oder im Rahmen des Projektes von Bedeutung sind, wie beispielsweise Projektnummer, Auftraggeber, Rechnungsadresse, Auftrag, auszuführende Arbeiten und Ähnliches, sowie die Daten, welche die geografischen Gebiete definieren, innerhalb welcher Projektdaten vor Ort erfasst werden sollen. Dabei kann es sich beispielsweise um eine Zone rund um den Standort einer Maschine handeln, an welcher im Rahmen des Projektes (Auftrages) Unterhaltsarbeiten auszuführen sind.

Weiter umfasst das System gemäss Ausführungsbeispiel der vorliegenden Erfindung Steuermittel, beispielsweise in Form vom Programmund/oder Filterfunktionen, um die Erfassung der Projektdaten vor Ort so zu steuern, dass über das mobile Kommunikationsendgerät 4 nur Projektdaten für diejenigen Projektdatensätze erfassbar sind, welchen Geodaten zugeordnet sind, die ein geografisches Gebiet definieren, welches die aktuelle Position des mobilen Kommunikationsendgerätes 4 miteinschliesst. Bei der Erläuterung der Steuermittel wird im folgenden Beispiel davon ausgegangen, dass die Geodaten, welche die geografischen Gebiete definieren, wie in Fig. 2 gezeigt, in Geodatensätzen abgespeichert sind, welche durch einen Gebietscode eindeutig festgelegt sind. Selbstverständlich ist es für den Fachmann unschwer möglich, die Steuermittel anzupassen, wenn die Geodaten an einer andern Stelle, beispielsweise in den Projektdatensätzen, abgespeichert sind. Die Steuermittel des Ausführungsbeispiels umfassen Programmittel, welche bei der Erfassung von Projektdaten vor Ort in einem ersten Schritt eine Liste derjenigen Gebietscodes erstellen, deren zugehörige Geodatensätze geografische Gebiete definieren, welche die aktuelle Position des mobilen Kommunikationsendgerätes 4 miteinschliessen. Die Steuermittel umfassen weiter eine Filterfunktion, welche in einem zweiten Schritt aus der Gesamtheit der Projektdatensätze diejenigen Projektdatensätze herausfiltert, für welche eine Zuordnung zu einem der Gebietscodes in der Liste aus dem ersten Schritt besteht. Weiter umfassen die Steuermittel Programmittel, um in einem dritten Schritt auf der Anzeige des mobilen Kommunikationsendgerätes 4 eine Eingabemaske für die Projektdaten der im zweiten Schritt bestimmten Projektdatensätze anzuzeigen. Wahlweise kann im dritten Schritt zuerst eine Auswahlmaske angezeigt werden, um aus den im zweiten Schritt bestimmten Projektdatensätzen, denjenigen Projektdatensatz auszuwählen, zu welchem Projektdaten eingegeben werden sollen. Falls weiter dafür gesorgt wird, dass die Projektdatensätze durch einen entsprechenden Passwortschutz vor unbefugtem Zugriff geschützt sind, stellt der Programmablauf im oben beschriebenen Ausführungsbeispiel sicher, dass nur Projektdaten zu denjenigen Projektdatensätzen eingegeben und erfasst werden können, welchen Geodaten zugeordnet sind, die ein geografisches Gebiet definieren, welches die aktuelle Position des mobilen Kommunikationsendgerätes 4 miteinschliesst.

In einer Ausführungsvariante der vorliegenden Erfindung umfasst das System Steuermittel, um die Projektdaten bei der Erfassung vor Ort auf Grund der Position des mobilen Kommunikationsendgerätes 4 automatisch einem bestimmten Projektdatensatz zu zuordnen. Dies ist insbesondere dann von Bedeutung, wenn den Projektdatensätzen Geodaten zugeordnet sind, welche geografische Gebiete definieren, welche sich nicht gegenseitig überschneiden. Dank der oben beschriebenen Ausführungsvariante kann die Erfassung der Projektdaten vor Ort in diesem Fall wesentlich vereinfacht werden.

In einer Ausführungsvariante umfasst das mobile Kommunikationsendgerät 4 Identifizierungsmittel zum Identifizieren des Kommunikationsendgerätebenutzers, beispielsweise eine SIM (Subscriber Identity Module)-Karte, welche die Benützung des Kommunikationsendgerätes erst nach Eingabe eines Pincode freigibt, und Übermittlungsmittel zur Übermittlung von Identifizierungsdaten an das zentrale Computersystem. Die vorzugsweise automatisch übermittelten Identifizierungsdaten können beispielsweise die IMSI (International Mobile Subscriber Identity)-Kennung enthalten, welche auf der SIM-Karte gespeichert ist. Dies erlaubt eine automatische Identifizierung des Kommunikationsendgerätebenutzers im zentralen Computersystem, sodass auf eine zusätzliche Identifizierung und/oder Authentifizierung bei der Erfassung der Projektdaten vor Ort verzichtet werden kann.

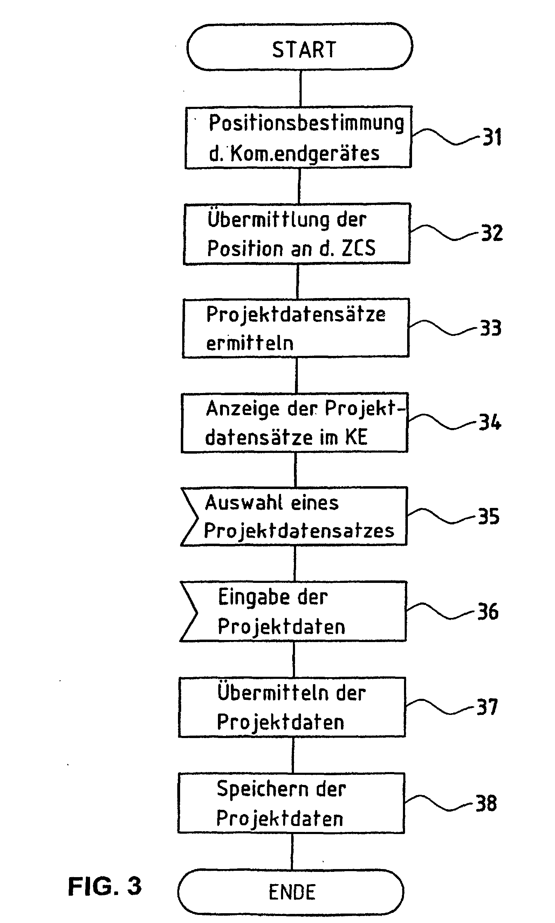

Die nachfolgende Beschreibung einer Ausführungsvariante der Verfahrensschritte gemäss der vorliegenden Erfindung nimmt Bezug auf Fig. 3. Im Schritt 31 wird die aktuelle Position eines mobilen Kommunikationsendgerätes (KE) für die Erfassung von Projektdaten vor Ort bestimmt und/oder abgefragt, beispielsweise mittels eines GPS-Empfängers, welcher mit dem mobilen Kommunikationsendgerät gekoppelt ist, oder indem eine Näherung für die aktuelle Position des mobilen Kommunikationsendgerätes von einem Serviceprovider, beispielsweise vom Betreiber eines Mobilfunknetzes, abgefragt wird. Im Schritt 32 wird die aktuelle Position des mobilen Kommunikationsendgerätes an ein zentrales Computersystem (ZCS) übermittelt, beispielsweise über das Internet, Internet Mobile, oder über ein Mobilfunktelefonnetz, beispielsweise ein UMTS-, GSM- oder satellitenbasiertes Mobilfunktelefonnetz, unter Verwendung von SMS, USSD und/oder WAP, in welchem zentralen Computersystem Datenstrukturen eingerichtet sind, beispielsweise in Form einer Datenbankanwendung. Die Datenstrukturen umfassen Projektdatensätze zur Speicherung der zu erfassenden Projektdaten, welchen Projektdatensätzen jeweils feste Geodaten zugeordnet sind, welche Geodaten ein geografisches Gebiet definieren. Im Schritt 33 werden im zentralen Computersystem diejenigen Projektdatensätze ermittelt, welchen Geodaten zugeordnet sind, die ein geografisches Gebiet definieren, welches die aktuelle Position des mobilen Kommunikationsendgerätes miteinschliesst, und im Schritt 34 die Beschreibung der so ermittelten Projektdatensätze im mobilen Kommunikationsendgerät angezeigt, beispielsweise auf einer Auswahl- und/oder Eingabemaske, welche auf dem Display des mobilen Kommunikationsendgerätes angezeigt wird. Im Schritt 35 wird einer der im mobilen Kommunikationsendgerät angezeigten Projektdatensätze ausgewählt. Im Schritt 36 erfolgt die Eingabe der zum ausgewählten Projektdatensatz gehörenden Projektdaten, beispielsweise indem die entsprechende Information, z.B. Fahrtkosteri oder eine Arbeitszeit, über die Tastatur des mobilen Kommunikationsendgerätes eingegeben wird, im Schritt 37 erfolgt die Übermittlung der eingegebenen Projektdaten über das Kommunikationsnetz, und der Empfang der eingegebenen Projektdaten im zentralen Computersystem und im Schritt 38 werden die eingegebenen Projektdaten im zugehörigen Projektdatensatz im zentralen Computersystem gespeichert.

## Patentansprüche

1. System zur Erfassung, Speicherung und Verwaltung von Projektdatensätzen, welche Projektdaten enthalten, umfassend:
ein zentrales Computersystem (1) zum Empfangen der Projektdaten und zum Speichern und Verwalten der Projektdatensätze,
mindestens ein mobiles Kommunikationsendgerät (4) mit Eingabemitteln (41, 42) zum Erfassen der Projektdaten, welches mobile Kommunikationsendgerät (4) zur Erfassung und Übermittlung der Projektdaten über ein Kommunikationsnetz (3) mit dem zentralen Computersystem verbindbar ist; und
Positionsbestimmungsmittel (5) zur Bestimmung der aktuellen Position des mobilen Kommunikationsendgerätes (4), **gekennzeichnet dadurch,**
**dass** im zentralen Computersystem (1) Datenstrukturen eingerichtet sind, welche die genannten Projektdatensätze zur Speicherung der zu erfassenden Projektdaten umfassen, und den Projektdatensätzen jeweils feste Geodaten zugeordnet sind, welche Geodaten ein geografisches Gebiet definieren; und
**dass** das System Steuermittel umfasst, um die Erfassung der Projektdaten so zu steuern, dass über das mobile Kommunikationsendgerät (4) nur Projektdaten für diejenigen Projektdatensätze erfassbar sind, welchen Geodaten zugeordnet sind, die ein geografisches Gebiet definieren, welches geografische Gebiet die aktuelle Position des mobilen Kommunikationsendgerätes (4) miteinschliesst.

2. System nach Anspruch 1, **gekennzeichnet dadurch, dass** das System Steuermittel umfasst,
um das System so zu steuern, dass im mobilen Kommunikationsendgerät nur Eingabefelder für Projektdaten von denjenigen Projektdatensätzen angezeigt werden, welchen Geodaten zugeordnet sind, die ein geografisches Gebiet definieren, welches die aktuelle Position des mobilen Kommunikationsendgerätes miteinschliesst, und/oder
um die Projektdaten bei der Erfassung auf Grund der aktuellen Position des mobilen Kommunikationsendgerätes automatisch bestimmten Projektdatensätzen zu zuordnen.

3. System nach Anspruch 1 oder 2, **gekennzeichnet dadurch, dass** das mobile Kommunikationsendgerät Identifizierungsmittel zum Identifizieren des Kommunikationsendgerätebenutzers umfasst, und Übermittlungsmittel zur Übermittlung von Identifizierungsdaten an das zentrale Computersystem, und das zentrale Computersystem Programmmittel umfasst, um den Kommunikationsendgerätebenutzer auf Grund der übermittelten Identifizierungsdaten zu identifizieren.

4. System nach einem der Ansprüche 1 bis 3, **gekennzeichnet dadurch, dass** das mobile Kommunikationsendgerät nach dem GSM-Standard arbeitet und/oder WAP (Wireless Application Protocol)-fähig ist.

5. System nach einem der Ansprüche 1 bis 4, **gekennzeichnet dadurch, dass** die Positionsbestimmungsmittel einen GPS, Global Positioning System,-Empfänger umfassen.

6. Verfahren zur Erfassung, Speicherung und Verwaltung von Projektdatensätzen, welche Projektdaten enthalten, in welchem Verfahren:
die Projektdatensätze in einem zentralen Computersystem (1) gespeichert und verwaltet werden, in welchem zentralen Computersystem (1) die Projektdaten empfangen werden,
Projektdaten mit Hilfe eines mobilen Kommunikationsendgerätes (4) erfasst werden, welches mobile Kommunikationsendgerät (4) zur Erfassung und Übermittlung der Projektdaten über ein Kommunikationsnetz (3) mit dem zentralen Computersystem (1) verbunden wird, und
die aktuelle Position des mobilen Kommunikationsendgerätes (4) mit Hilfe eines Positionsbestimmungssystems (5) bestimmt wird, **gekennzeichnet dadurch, dass** im genannten Verfahren:
die zu erfassenden Projektdaten in den genannten Projektdatensätzen gespeichert werden, welche Projektdatensätze Teil einer vordefinierten Datenstruktur im zentralen Computersystem (1) sind, und welchen Projektdatensätzen jeweils feste Geodaten zugeordnet sind, welche Geodaten geografische Gebiete definieren; und
die Erfassung der Projektdaten so gesteuert wird, dass über das mobile Kommunikationsendgerät (4) nur Projektdaten für diejenigen Projektdatensätze erfassbar sind und erfasst werden, welchen Geodaten zugeordnet sind, die ein geografisches Gebiet definieren, welches geografische Gebiet die aktuelle Position des mobilen Kommunikationsendgerätes (4) miteinschliesst.

7. Verfahren gemäss Anspruch 6, **gekennzeichnet dadurch dass** das Verfahren folgende Verfahrensschritte umfasst:
Bestimmen und/oder Abfragen der aktuellen Position eines mobilen Kommunikationsendgerätes für die Erfassung von Projektdaten;
Übermitteln der aktuellen Position des mobilen Kommunikationsendgerätes an das zentrale Computersystem;
Ermitteln derjenigen Projektdatensätze im zentralen Computersystem, welchen Geodaten zugeordnet sind, die ein geografisches Gebiet definieren, welches die aktuelle Position des mobilen Kommunikationsendgerätes miteinschliesst;
Anzeige der Beschreibung der so ermittelten Projektdatensätze im mobilen Kommunikationsendgerät;
Auswahl eines der im mobilen Kommunikationsendgerät angezeigten Projektdatensätze;
Eingabe der zum ausgewählten Projektdatensatz gehörenden Projektdaten über das mobile Kommunikationsendgerät;
Übermitteln der erfassten Projektdaten über das Kommunikationsnetz, und Empfangen der erfassten Projektdaten im zentralen Computersystem; und
Speichern der erfassten Projektdaten im zugehörigen Projektdatensatz im zentralen Computersystem.

8. Verfahren nach Anspruch 6 oder 7, **gekennzeichnet dadurch, dass** die Projektdaten bei der Erfassung auf Grund der aktuellen Position des mobilen Kommunikationsendgerätes automatisch bestimmten Projektdatensätzen zugeordnet werden.

9. Verfahren nach einem der Ansprüche 6 bis 8, **gekennzeichnet dadurch, dass** für die Erfassung der Projektdaten ein mobiles Kommunikationsendgerät benützt wird, mittels welchem der Kommunikationsendgerätebenutzer identifizierbar ist, und Identifizierungsdaten vom mobilen Kommunikationsendgerät an das zentrale Computersystem übermittelt werden, und der Kommunikationsendgerätebenutzer auf Grund der übermittelten Identifizierungsdaten im zentralen Computersystem identifiziert wird.

10. Verfahren nach einem der Ansprüche 6 bis 9, **gekennzeichnet dadurch, dass** die Projektdaten Arbeitszeiten umfassen, welche mit dem mobilen Kommunikationsendgerät erfasst werden.

11. Verfahren nach einem der Ansprüche 6 bis 10, **gekennzeichnet dadurch, dass** im Verfahren ein mobiles Kommunikationsendgerät benutzt wird, welches nach dem GSM-Standard arbeitet und/ oder WAP (Wireless Application Protocol)-fähig ist.

12. Verfahren nach einem der Ansprüche 6 bis 11, **gekennzeichnet dadurch, dass** die aktuelle Position des mobilen Kommunikationsendgerätes mit Hilfe eines GPS, Global Positioning System,-Empfängers bestimmt wird.

## Claims

1. System for capturing, storing and administering project data records containing project data, comprising:
a central computer system (1) for receiving project data and for storing and administering project data records,
at least one mobile communication terminal (4) with input means (41, 42) for capturing project data, which mobile communication terminal (4) is connectible to the central computer system (1) a communication network (3) for capturing and transmitting project data via; and
position determining means (5) for determining the current position of the mobile communication terminal (4), **characterised**
**in that** data structures are set up in the central computer system (1), which data structures comprise the said project data records for storing the project data to be captured, and fixed geodata are assigned in each case to the project data records, which geodata define a geographic region; and
**in that** the system comprises control means to control the capturing of the project data such that only project data for those project data records to which geodata are assigned defining a geographic region including the current position of the mobile communication terminal (4) are able to be captured via the mobile communication terminal (4).

2. System according to claim 1, **characterised in that** the system comprises control means
to control the system such that displayed in the mobile communication terminal are only input fields for project data of those project data records to which geodata are assigned defining a geographic region including the current position of the mobile communication terminal, and/or
during the capturing, to assign the project data to project data records automatically determined on the basis of the current position of the mobile communication terminal.

3. System according to claim 1 or 2, **characterised in that** the mobile communication terminal comprises identification means to identify the communication terminal user, and transmission means to transmit identification data to the central computer system, and the central computer system comprises program means to identify the communication terminal user on the basis of the transmitted identification data.

4. System according to one of the claims 1 to 3, **characterised in that** the mobile communication terminal operates according to the GSM standard and/or is WAP (Wireless Application Protocol)-capable.

5. System according to one of the claims 1 to 4, **characterised in that** the position determining means comprise a GPS, Global Positioning System, receiver.

6. Method for capturing, storing and administering project data records containing project data, in which method:
the project data records are stored and administered in a central computer system (1), in which central computer system (1) the project data are received,
project data are captured with the aid of a mobile communication terminal (4), which mobile communication terminal (4) is connected to the central computer system (1) via a communication network for capturing and transmitting project data, and
the current position of the mobile communication terminal (4) is determined with the aid of a position determining system (5), **characterised in that** in the said method:
the project data to be captured are stored in the said project data records, which project data records are part of a predefined data structure in the central computer system (1), and to which project data records fixed geodata are assigned in each case, which geodata define geographic regions; and
the capturing of the project data is controlled such that only project data for those project data records are able to be captured via the mobile communication terminal (4) and are captured to which geodata are assigned defining a geographic region including the current position of the mobile communication terminal (4).

7. Method according to claim 6, **characterised in that** the method comprises the following method steps:
determining and/or querying the current position of a mobile communication terminal for the capturing of project data;
transmitting the current position of the mobile communication terminal to the central computer system;
determining those project data records in the central computer system to which geodata are assigned defining a geographic region including the current position of the mobile communication terminal;
displaying in the mobile communication terminal the description of the thus determined project data records;
selecting one of the project data records displayed in the mobile communication terminal;
inputting via the mobile communication terminal the project data belonging to the selected project data record;
transmitting the captured project data via the communication network, and receiving the captured project in the central computer system;
storing the captured project data in the project data record belonging thereto in the central computer system.

8. Method according to claim 6 or 7, **characterised in that**, during the capturing, the project data are assigned to project data records automatically determined on the basis of the current position of the mobile communication terminal.

9. Method according to one of the claims 6 to 8, **characterised in that** for the capturing of the project data a mobile communication terminal is used by means of which the communication terminal user is identifiable, and identification data are transmitted from the mobile communication terminal to the central computer system, and the communication terminal user is identified in the central computer system on the basis of the transmitted identification data.

10. Method according to one of the claims 6 to 9, **characterised in that** the project data comprise working times which are captured by means of the mobile communication terminal.

11. Method according to one of the claims 6 to 10, **characterised in that** in the method a mobile communication terminal is used which operates according to the GSM standard and/or is WAP (Wireless Application Protocol)-capable.

12. Method according to one of the claims 6 to 11, **characterised in that** the current position of the mobile communication terminal is determined with the aid of a GPS, Global Positioning System, receiver.

## Revendications

1. Système pour la saisie, le stockage et la gestion de jeux de données de projet, qui contiennent des données de projets, système qui comprend
un système d'ordinateur central (1) pour la réception des données de projets et pour le stockage et la gestion des jeux de données de projet,
au moins un terminal de communication mobile (4) avec des moyens de saisie (41, 42) pour la saisie des données de projet, terminal mobile de communication (4) qui peut être relié pour la saisie et le transfert des données de projet, à travers un réseau de communication (3) avec le système informatique central (1) et
des moyens de détermination de position (5) pour la détermination de la position actuelle du terminal de communication mobile (4) **caractérisé en ce**
**que** dans le système informatique central (1) sont configurées des structures de données qui comprennent lesdits jeux de données de projet pour le stockage des données de projet à saisir et en ce que les jeux de données de projet sont associés respectivement à des données géographiques fixes, données géographiques qui définissent une région géographique ; et
et en ce que le système comprend des moyens de commande pour commander la saisie des données de projets de sorte qu'il n'est possible de saisir par l'intermédiaire du terminal de communication mobile (4) que les données de projets pour les jeux de données de projets qui sont associés à des données géographiques qui définissent une région géographique, région géographique qui englobe la position actuelle du terminal de communication mobile (4).

2. Systèmes selon la revendication 1, **caractérisé en ce que** le système comprend des moyens de commande,
pour piloter le système de sorte que dans le terminal de communication mobile ne sont affichés que des champs de saisie pour les données de projet parmi les jeux de données de projets qui sont associés à des données géographiques qui définissent une région géographique qui englobe la position actuelle du terminal de communication et/ou
pour associer les projets de données lors de la saisie automatiquement à des jeux de données de projets définis sur la base de la position actuelle du terminal de communication mobile.

3. Système selon la revendication 1 ou 2, **caractérisé en ce que** le terminal de communication mobile comprend des moyens d'identification de l'utilisateur du terminal de communication et des moyens pour la transmission de données d'identification au système informatique central et **en ce que** le système informatique central comprend des moyens de programme pour identifier l'utilisateur de terminal de communication sur la base des données d'identification transmises.

4. Système selon l'une des revendications 1 à 3, **caractérisé en ce que** le terminal de communication mobile (1) fonctionne selon le standard GSM et/ou est compatible WAP (Wireless Application Protocol = protocole d'application sans fil).

5. Système selon l'une des revendications 1 à 4, **caractérisé en ce que** le moyen de détermination de position comprennent un récepteur GPS (Global Positioning System = système mondial de positionnement).

6. Procédé pour la saisie, le stockage et la gestion de jeux de données de projet, qui contiennent des données de projets, procédé dans lequel
les jeux de données de projets sont gérés et stockés dans un système informatique central (1), système informatique central (1) dans lequel sont reçues les données de projet,
des données de projet sont saisies à l'aide d'un terminal de communication mobile (4), terminal de communication mobile (4) qui est relié pour la saisie et le transfert des données de projet à travers un réseau de communication (3) au système informatique central (1), et
la position actuelle du terminal de communication mobile (4) est déterminée à l'aide d'un système de détermination de positon (5), **caractérisé en ce que** dans ledit procédé :
les données de projet à saisir sont stockées dans les dites jeux de données de projet, jeux de données de projet qui font partie d'une structure de données prédéfinie dans le système informatique central et jeux de données de projet qui sont associés respectivement aux données géographiques fixes, données géographiques qui définissent des régions géographiques; et
la saisie des données de projet est commandée de sorte qu'il n'est possible de saisir par l'intermédiaire du terminal de communication mobile (4) que les données de projets pour les jeux de données de projets qui sont associés à des données géographiques qui définissent une région géographique, région géographique qui englobe la position actuelle du terminal de communication mobile (4).

7. Procédé selon la revendication 6, **caractérisé en ce que** le procédé comprend les étapes suivantes de procédé :
Détermination et/ou interrogation de la position actuelle d'un terminal de communication mobile pour la saisie de données de projet ;
Transmission de la position actuelle du terminal de communication mobile au système informatique central ;
Définition des jeux de données de projet dans le système informatique central qui sont associés à des données géographiques, qui définissent une région géographique, région qui englobe la position actuelle du terminal de communication mobile;
Affichage de la description des jeux de données de projet ainsi déterminés dans le terminal de communication mobile ;
Sélection des jeux de données de projet affichés dans le terminal de communication mobile ;
Saisie des données de projet faisant partie du jeu de donnée de projet sélectionné par l'intermédiaire du terminal de communication mobile;
Transmission des données de projets saisies à travers le réseau de communication et réception des données de projet saisies dans le système informatique central et
Stockage des données de projet saisies dans le jeu de données de projet respectif dans le système informatique central.

8. Procédé selon la revendication 6 ou 7, **caractérisé en ce que** les données de projet sont associées automatiquement à des jeux de données de projet lors de la saisie sur la base de la position actuelle du terminal de communication mobile.

9. Procédé selon l'une des revendications 6 à 8, **caractérisé en ce que** pour la saisie des données de projet, on utilise un terminal de communication mobile, au moyen duquel l'utilisateur du terminal de communication est identifiable et des données d'identification sont transmises par le terminal de communication mobile au système informatique central et l'utilisateur de terminal de communication mobile est identifié dans le système informatique central sur la base des données d'identification transmises.

10. Procédé selon l'une des revendications 6 à 9, **caractérisé en ce que** les données de projet comprennent des temps de travail qui sont saisis avec le terminal de communication mobile.

11. Procédé selon l'une des revendications 6 à 10, **caractérisé en ce que** dans le procédé, est utilisé un terminal de communication mobile qui fonctionne selon le standard GSM et/ou est compatible WAP (Wireless Application Protocol = protocole d'application sans fil).

12. Procédé selon l'une des revendications 6 à 11, **caractérisé en ce que** la position actuelle du terminal de communication mobile est défini par un récepteur GPS (Global Positioning System = système mondial de positionnement).
